# EUROPEAN PATENT APPLICATION

(11) **EP 4 112 368 A1**
(43) Date of publication of application: **04.01.2023**
(21) Application number: 21183150.8
(22) Date of filing: 01.07.2021
(51) Int. Cl.: B60L 53/30, B60L 53/50

(54) **MOBILE ENERGY SUPPLY UNIT**

(71) Applicant: Lorrygram GmbH, 5301 Eugendorf (AT)
(72) Inventor: STRASSER, Johann, 5020 Salzburg (AT)
(74) Representative: Platzöder, Michael Christian

(57) **Abstract**

A mobile energy supply unit, comprises: a transport container, i.e. a transportable and thus mobile container, with an exterior container wall, e.g. side wall, comprising a display for displaying information; an energy supply arrangement provided at least in parts within the container and comprising: one or more of an energy source, an energy converter, and an energy storage, and an access device for providing accessibility from the exterior of the container to energy provided by the energy supply arrangement; and a data storage and/or at least one data interface for receiving data from a remote data source. The energy supply unit is configured to obtain data from the data storage or via the at least one data interface from the remote data source and to display information on the display as a function of the obtained data.

## Description

The present invention relates to the field of energy supply units. Specifically, the invention is directed to a mobile energy supply unit which is suitable for temporary use at different locations, such as different event locations.

In today's infrastructure for land-based traffic, in particular automobile traffic, classical filling stations are typical as energy supply systems, where fuel, in particular gasoline, is available to be pumped into tanks of all kinds of different gas fueled vehicles, such as cars and trucks. These filling stations, in particular also their pumping units, are stationary installations being fixed to the ground and designed for stationary use only. Usually, big fuel storage tanks are available at the filling station, either buried in the ground or installed on the ground, from which pipes lead to the pumping units for transporting the fuel, such as gas or other liquid or gaseous fuels, from these storage tanks to the related pumping units.

Currently, in the wake of climate change, classical combustion engines running on fossil fuels are more and more replaced by electrical engines as drives for motor vehicles, in particular for cars and trucks and even motorcycles and the like. Furthermore, electrical bicycles have become very popular.

Nevertheless, electrical charging stations for such electrical vehicles (EV), such as home or office-based "wall boxes", public charging stations, or the so-called "supercharger" stations by a major EV manufacturer, are typically also stationary installations and in this respect similar to classical filling stations.

It is an object of the present invention to provide and improved energy supply unit which is particularly suitable for temporary use at different locations.

A solution to this problem is provided by the teaching of claim 1. Various preferred embodiments of the present invention are provided by the teachings of the dependent claims.

An aspect of the invention is directed to a mobile energy supply unit, comprising: (i) a transport container, i.e. a transportable and thus mobile container, with an exterior container wall, e.g. side wall, comprising a display for displaying information; (ii) an energy supply arrangement provided at least in parts within the container and comprising: (ii-1) one or more of an energy source, an energy converter, and an energy storage, and (ii-2) an access device for providing accessibility from the exterior of the container to energy provided by the energy supply arrangement; and (iii) a data storage and/or at least one data interface for receiving data from a remote data source. The energy supply unit is configured to obtain data from the data storage or via the at least one data interface from the remote data source and to display information on the display as a function of the obtained data.

The term "mobile energy supply unit", as used herein, refers particularly to a unit which is designed for temporary use at different locations. Unlike a classical stationary filling station or pumping unit thereof, it is designed as a transportable, hence mobile unit, e.g. for transport by a truck or a train or an aircraft (e.g. cargo helicopter). It may even be designed for use or other operation during its transportation. While it may have means for self-transport, such as wheels or rolls or even a drive, such means are not mandatory.

The term "transport container", or abbreviated "container", as used herein, refers particularly to a container which is designed for mobile use, i.e. for being transported between different locations, and has a strength suitable to withstand shipment, storage, and handling. Specifically, the transport container may be designed for carrying goods or other materials inside it and thus as a transport means for such goods or other materials. Transport containers may particularly be or comprise large reusable steel boxes having several cubic meters of storage volume and may specifically have the format of an intermodal freight container (e.g. as standardized per ISO norm, such as ISO 1496 or ISO 6346) or a roller container or a tank container (e.g. "tanktainer" or "transtainer"), e.g. for storing and/or transporting a liquid or a gas.

The term "access device", as used herein, refers particularly to a means for proving accessibility from the exterior of the transport container to energy provided by the energy supply arrangement of the container. For example, if the energy is provided as electrical energy, the access device might be or comprise a typical charging interface for EVs. In the case of liquid or gaseous fuel, the access device might be or comprise a tap hose or a dispenser for dispensing the fuel.

The term "energy source", as used herein, refers particularly to a device for producing a certain form or energy, such as electrical energy, or for transforming one form of energy into another form of energy. Accordingly, an electrochemical battery or a generator for transforming a fossil or artificial fuel into electrical energy are examples of an energy source.

The term "energy converter" as used herein refers particularly to a device for converting a particular form of energy between different sub-forms of that form of energy (e.g. in the case of electrical energy for example between AC and DC, or between different voltages and/or between different AC-frequencies or AC-phases. Accordingly, a power converter for converting electrical currents or voltages is an example of an energy converter.

The term "energy storage" as used herein refers particularly to a means for storing electrical energy, e.g. in the form of one or more energy carriers, such as fossil or artificial fuels, or wood. The energy carrier to be stored might for example be solid, liquid or gaseous at relevant conditions, e.g. "normal" (standardized) temperature T and pressure p conditions (e.g. T = 273,15 K ≙ 0 °C and p = 101,325 kPa).

Where the terms "first", "second", "third" and the like are used in the description and in the claims, they are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The mobile energy supply unit of the present solution thus has the advantage that due to its transportability per design it may be temporarily used at different locations without the need of any stationary installment of the unit or complex installation or deinstallation procedures. Furthermore, the display provides a man-machine-interface (MMI), at least for communicating information, thus turning the mobile energy supply unit into a dual-use or even multi-use device that can serve both as a mobile hub for supply of energy and of information. This may particularly be used to communicate location-dependent information or for adapting the communication of information otherwise, e.g. by a suitable language or sign selection, as a function of location, in particular of the current temporary location of the energy supply unit itself.

In the following, preferred embodiments of the mobile energy supply unit are described, which can be arbitrarily combined with each other, unless such combination is explicitly excluded or technically impossible.

In some embodiments, the display is a device which is mounted to the exterior container wall. In other embodiments, the display may be integrated, at least in parts, within the exterior container wall.

In some embodiments, the energy supply arrangement is configured as one or more of the following: (i) an electrical charging station for electrical or hybrid vehicles; (ii) an electrical charging station for portable electronic devices, e.g. mobile communication devices (e.g. smart phones), cameras, mobile computers, electrical camping equipment or electrical tools, e.g. power tools, of various kinds; (iii) a supply station for an energy carrier, e.g. one or more different fuels, e.g. solid, liquid or gaseous natural or artificial fuels. Thus, the energy supply unit can serve as a local energy supply for extending the operational lifetime or range of all kinds of different mobile device, e.g. battery or fuel-driven devices.

In some embodiments, the energy supply arrangement is configured to simultaneously or selectively supply two or more different forms of energy and/or different energy carriers. For example, the energy supply arrangement might be configured to supply a fossil or artificial liquid fuel as one sort of energy carrier, and a gaseous fuel, such as natural gas or hydrogen as another sort of energy carrier. Electrical energy is yet another form of energy, the energy supply arrangement may be configured to provide instead or in addition to the aforementioned energy carriers. Particularly, the energy supply arrangement may comprise multiple different compartments, particularly storage compartments, each for hosting or storing a related one of one or more energy sources, energy converters, and energy storage (e.g. storage for energy carriers). Accordingly, these embodiments enable the energy supply unit to selectively or simultaneously supply different forms of energy while avoiding an unintended mixing or interference of the various forms of energy or the means for generating, storing or supplying them.

In some embodiments, the energy source comprises one or more electrochemical cells for generating electrical energy. This allows particularly for an autonomous operation of the energy supply unit. Specifically, a connection to an energy source external to the energy supply unit and (particularly frequent) refills of energy carriers into an energy storage of the energy supply arrangement are thus obsolete.

In some embodiments, the energy supply unit is configured to: (i) communicate a current status or mode of operation of the energy supply unit to the data storage and/or via the at least one data interface to the remote data source; (ii) obtain in response from the data storage or the remote data source, respectively, specific information as a function of the communicated current status or mode of operation; and (iii) display the received specific information on the display. This enables a mode-specific selection or definition of information to be displayed. For example, the information may depend on whether the energy supply unit is currently in an operating mode where its energy supply capability is available, or whether it is in a non-operating mode, e.g. when out of order or shut down or in a maintenance mode. In another example, the specific information may depend on the sort of energy or energy carrier(s) currently available for supply at the energy supply unit or on a corresponding availability level, e.g. filling level of a corresponding energy carrier in a related storage department or the remaining charge or an electrical energy storage, e.g. electrochemical battery, of the energy supply arrangement.

Specifically, in some embodiments, the energy supply unit has a maintenance mode of operation wherein the energy supply unit is configured to: (i) communicate the maintenance mode as current mode of operation of the energy supply unit to the data storage and/or via the at least one data interface to the remote data source; (ii) obtain in response from the data storage or the remote data source, respectively, data representing instructional information on how to properly set-up, configure and/or maintain the energy supply unit; and (iii) to display a representation of the instructional information on the display, e.g. as a text and/or graphical output. In this way, the energy supply unit can itself support its own set-up (e.g. at a new location), configuration or maintenance by providing via the display suitable instructional information. Particularly, the energy supply unit may also comprise a man-machine interface (MMI) adapted to receive inputs from a human user or operator of the energy supply unit, e.g. specific selections of options being offered within the maintenance mode, and communicated them as part of step (i) in order to obtain in step (ii) and display in step (iii) specific instructional information, e.g. maintenance or set-up or operating instructions (e.g. checklists), relating to the one or more options corresponding to the inputs at the MMI. For example, the display may be a touch screen and thus serve as a two-way MMI providing both the input function and the display function.

In some embodiments, the energy supply unit has a remote-control mode of operation, wherein the energy supply unit is configured to: (i) obtain via the at least one data interface control information and/or to generate control information as a function of obtained sensor data generated by one or more sensors, e.g. of the energy supply unit itself, for detecting a current status or operation of the energy supply unit; and (ii) enable or disable at least one functionality of the energy supply unit as a function of the obtained control information. For example, the remote-control mode may be used to clear or block certain operating functionalities, such as supplying energy, or maintenance functionalities such as self-cleaning or self-tests, of the energy supply unit as a function of the sensor data. If, for example, the sensor data indicates, that a storage compartment for an energy carrier is not properly closed or locked, the supply of that energy carrier or even any available energy carrier or other form of energy may be disabled, until the storage compartment is put in a correct operational mode again, such as by properly closing or locking the storage compartment again. In another example, the remote unit may be used to disable or enable functionalities of the energy supply unit as a function of a maintenance condition of the energy supply unit as indicated by the sensor data. This may particularly be useful for maintaining a high safety level by ensuring that the energy supply unit can only be used for suppling energy, if it is properly maintained.

In some embodiments, the at least one data interface comprises a standardized data interface being configured for wireless or wired communication with a mobile computing or communication device, and/or a communication system of a vehicle. For example, the data interface may comprise an interface for one or more common cellular communication standards, such as 3G, 4G (LTE) or 5G or later generations (6G and so on) or Bluetooth or WLAN, just to name a few. Specifically, the data interface may be configured as a communication node for one or more Internet-of-things (IOT) communication technologies.

In some embodiments, the container wall is configured such that it can be swiveled between a closed position where it closes the container, at least in parts, and an open position where it provides access to a space within the interior of the container. Specifically, the container wall, may be configured such that it can be swiveled around an axis that extends substantially parallel to a bottom wall of the container (i.e. horizontally in normal operation of the energy supply unit). Such a design may particularly be useful or advantageous, if the container wall has a large horizontal extension, e.g. several meters, and thus implementing a door type vertical swiveling axis might be more challenging in view of gravity and related mechanical leverages (torques) acting on such a swiveling door-type container wall (hereinafter also referred to as "first" container wall"). In addition, at least one further container wall (hereinafter also referred to as "second" container wall") of the container may also be configured such that it can be swiveled between a closed position where it closes the container, at least in parts, and an open position where it provides access to a space within the interior of the container. Particularly, such the second container wall may be located opposite the first container wall. In this way the container may specifically be implemented according to a so-called "Wingliner" design, where the two opposing container walls, when opened, provide access to the interior of the container from the two opposing sides. One or both of the first and second container walls may even be divided into two or more segments being connected by one or more hinges, so that such a container wall may itself be folded. For example, it may be foldable in such a way that when being opened, it can be swiveled as a whole an folded such that its rests on the ceiling of the container, thus providing optimal access to the interior of the container.

Specifically, in some of embodiments, the energy supply unit is configured to supply electrical energy via one or more cables or a liquid or gaseous energy carrier via one or more hoses and at least one of the cables or hoses, respectively, is fixed to or guided relative to the container wall at a fixpoint position (e.g. by a fixing or guiding means) in such a way that when the container wall is in its open position, a free terminal section of the cable a free terminal section of the cable or the hose, respectively, extends from the fixing position. Accordingly, this design provides a configuration where the cables or hoses may be provided in a top-down fashion, thus allowing for a particularly convenient and easy operation of the cables/hoses, specifically in comparison to a classical bottom-up approach as known from typical conventional filling stations or EV-charging stations. Such a design may similarly be applied to the second container wall.

In some embodiments, the transport container is or comprises one or more of the following: (i) an intermodal container; (ii) a roller container; (iii) a tank container for a liquid or gas. Specifically, using a container with a standardized format enables an easy and safe transport between different locations, e.g. temporary operation sites of the energy supply unit, with a wider variety of different transport vehicles available for transporting such standardized containers, e.g. trucks, railway carriages, cargo aircrafts, or ships.

In some embodiments, the energy supply arrangement comprises at least one of the following: (i) a photovoltaic system; (ii) a connector for electrically connecting the energy supply arrangement to an external source of electrical energy; (iii) an electrochemical accumulator; (iv) an energy converter for converting a first electrical form of energy (e.g. AC at 50 Hz and 220 V) received as an input energy into a different second electrical form of energy (e.g. DC or AC at 60 Hz at 110 V) as an output energy; (v) an energy converter for converting a non-electric form of energy received as an input energy into electrical energy as an output energy (e.g. a generator for converting chemical energy provided by an energy carrier, e.g. fuel, into electrical energy). Some of these options are particularly suitable for enabling a largely or at least temporarily autonomous use of the energy supply unit, e.g. options (i), (iii) and (v), while some of the options are particularly suitable for enabling a flexible use or operation of the energy supply unit, e.g. according local supply conditions or requirements at the current location, e.g. options (ii) and (iv).

In some embodiments, the energy supply unit further comprises at least one of a vending machine for goods, a service kiosk (e.g. for online services, such as information or financial services), an inquiry kiosk (e.g. for tourist information or navigation purposes), a parcel deposit and pick-up station, an automated teller machine. Accordingly, these embodiments add further service functionality to the energy supply unit, thus turning it into a mobile multi-service hub.

In some embodiments, the energy supply unit further comprises a position detection unit configured to determine a current location of the energy supply unit. This may particularly be used for tracking or surveillance purposes, e.g. for protecting the energy supply unit against unauthorized transportation, by issuing an alarm or the like, if an unauthorized motion, i.e. change of position detected by the position detection unit, is detected.

Furthermore, in some of these embodiments, the energy supply unit is further configured to automatically configure one or more of the following as a function of a current location determined by the position detection unit: (i) a language setting for the display or another (possibly present) man-machine-interface provided on or at the energy supply unit; (ii) a conversion setting of an energy converter of the energy supply arrangement; (iii) a display setting of the display; (iv) a selection of type or amount of energy, goods or services the energy supply unit is offering for supply; (v) a configuration of a vending machine for goods, a service kiosk, an inquiry kiosk, a parcel deposit and pick-up station, and/or an automated teller machine of the energy supply unit; (vi) information to be displayed on the display or another man-machine interface of the energy supply unit. This allows for a self-configuration of the one or more of the above properties or functionalities of the energy supply unit as a function of the current location.

In some embodiments, the energy supply unit is further configured to receive software-update data via the at least one data interface and to perform a software-update of software configured to be executed on a processing unit of the energy supply unit based on such received software-update data. Particularly, in the case of a wireless data interface, this allows for so-called over-the-air (OTA) updates of such software and thus software-implemented properties and functionalities of the energy supply unit. This may be long-distance OTA, e.g. via a cellular network, or local OTA, e.g. by means of a wireless connection between a nearby (mobile) service station, e.g. service truck and the energy supply unit. Particularly in the latter case, a wired connection may be used instead or in addition to an OTA connection.

### BRIEF DESCRIPTION OF THE DRAWINGS

Further advantages, features and applications of the present invention are provided in the following detailed description and the appended figures, wherein:
**Fig. 1** schematically illustrates a block diagram of a mobile energy supply unit according to an exemplary embodiment of the invention;
**Fig. 2** schematically illustrates a perspective view of an energy supply unit according to an exemplary "Wingliner"-type embodiment of the invention in a state, where its two swiveling exterior container walls are closed;
**Fig. 3** schematically illustrates a perspective view of the energy supply unit of Fig. 2 in a state, where one of the two swiveling exterior container walls is open while the other is closed;
**Fig. 4** schematically illustrates a perspective view of the energy supply unit of Fig. 2 in a state, where both swiveling exterior container walls are open;
**Fig. 5** schematically illustrates a perspective view of the energy supply unit of Fig. 2 in a state, where one of the two swiveling exterior container walls is open, such that various access devices for supplying energy are accessible from the exterior of the container; and
**Fig. 6A** shows a schematic side view of the energy supply unit of Fig. 5, wherein a cable of an access device is guided by a guiding means located at a fixed-point position provided at the open swiveling exterior container wall, such as to enable a provision of the cable for use, where its terminal section extends in a top-down direction from the open container wall;
**Fig. 6B** shows an exemplary variant of the energy supply unit of Fig. 6A, where there are one or more access devices on each of two opposing sides of the container, which become accessible when both swiveling container walls are opened.

In the figures, identical reference signs are used for the same or mutually corresponding elements of the energy supply described herein.

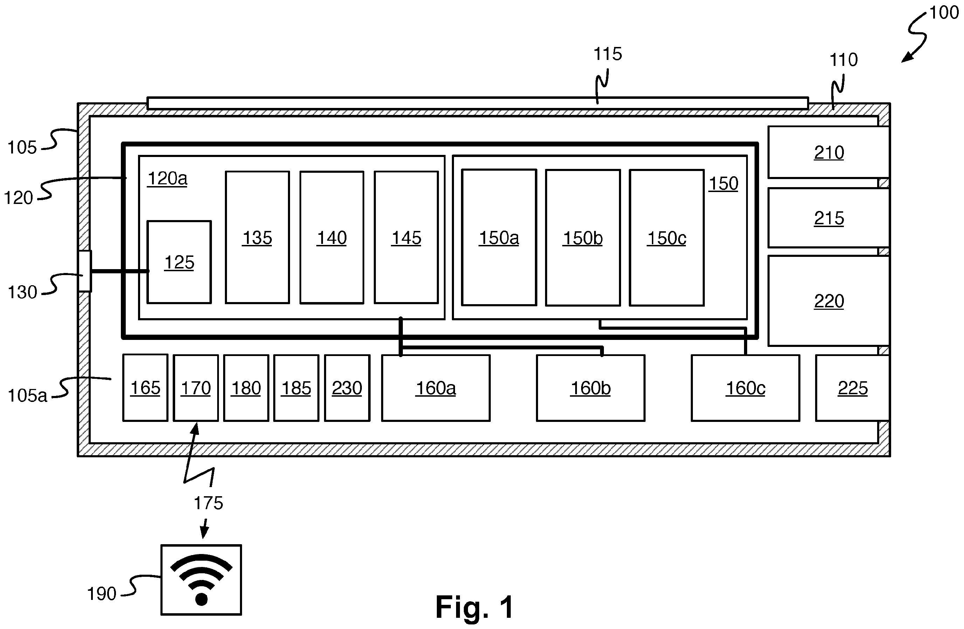

**Fig. 1** shows a block diagram of an energy supply unit 100 according to an exemplary embodiment of the invention. The mobile energy supply unit 100 comprises a transport container 105 ("container") which may be, for example, a typical intermodal container such as a so-called "dry freight" or "general purpose" container in the form of a durable closed steel box, mostly 8 feet (2.4 m) wide and of either 20 or 40 feet (6.1 or 12.2 m) standard length. The common heights are 8 feet 6 inches (2.6 m) and 9 feet 6 inches (2.9 m) - the latter being known as "High Cube" or "Hi-Cube (HC)" containers.

Alternatively, the transport container may for example be a roller container (not shown in the figures), i.e. a container type that can be carried by trucks to be pushed to ground level by help of a hook and level arm with the container possibly sliding on steel roller wheels. Specifically, the container may even comprise a seating accommodation, e.g. in the case of a roller container, where such seat might be supported (at least temporarily during use) by a pull element designed to interact with the hook for handling the roller container. Other form factors of the transport container are possible as well, e.g. a tanktainer or a transtainer, preferably of a type standardized by ISO.

The container 105, which is illustrated in Fig. 1 in a top view has a bottom wall ("bottom"), a top wall ("ceiling") and four sidewalls, all of which are actually "exterior" container walls, because they separate the interior 105a of the container 105 from its exterior environment. At least one of the container walls is a container wall 110 comprising a display 115. Display 115 may particularly be mounted on and/or integrated into container wall 110. Specifically, display 115 may be a conventional large-screen display, e.g. of an LCD or LED or OLED type, and/or a specific type of display which is particularly suitable for being integrated or mounted to a surface that is frequently subject to accelerations, in particular shocks, vibrations and/or other oscillations, like such which may typically occur when the container is transported, e.g. on a truck. For example, display 115 may be of a flexible type rather than being a rigid panel and may thus be particularly adapted to cope with such demanding conditions.

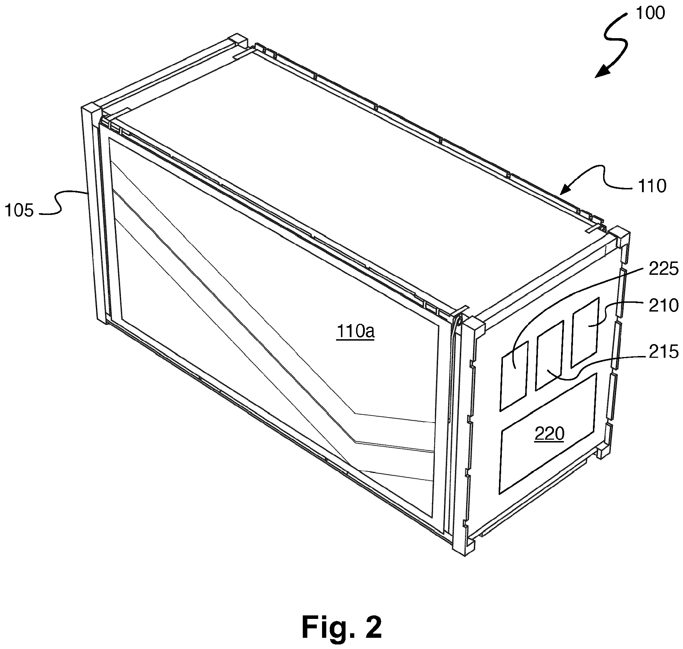

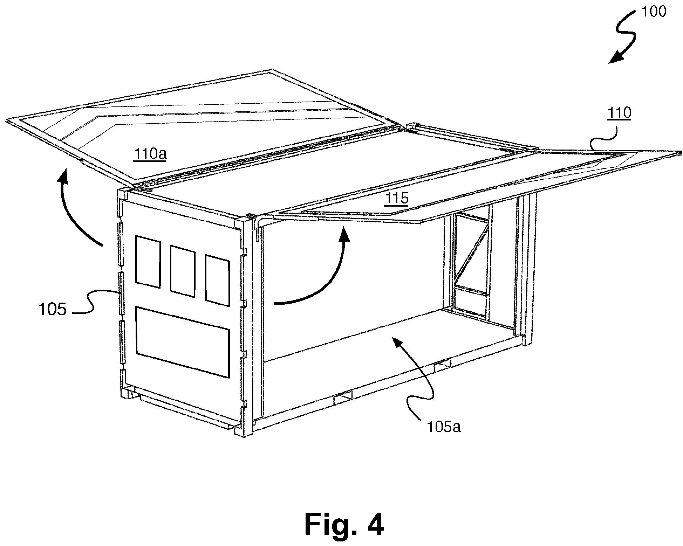

One or more of the container walls may be of the swiveling type, which means that it can be opened like a door or a hatch by swinging (swiveling or pivoting) it around a given axis of rotation, designed as a horizontal or vertical axis when the container is placed with its bottom surface on a horizontal ground. Specifically, container wall 110 may be of the swiveling type, e.g. as shown in Fig. 4, which allows for swiveling the display 115 as well along with container wall 110. The container 105, as illustrated particularly in Figs. 2 to 6, has two swiveling container walls 110 and 110a on opposite sides of the container 105.

Container 105 comprises within its interior 105a an energy supply arrangement 120 which may particularly be designed as a replaceable unit. The energy supply arrangement 120 of energy supply unit 100 comprises an electrical energy supply unit 120a for providing electrical energy, and an energy storage 150, such as a tank for fuel or another energy carrier, for providing a supply of energy in the form or an energy carrier.

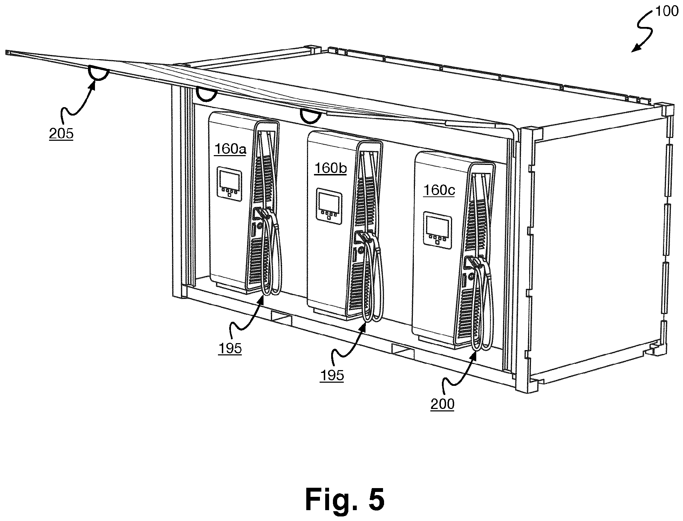

Specifically, electrical energy supply unit 120a may particularly comprise one or more of (i) an energy converter 125, (ii) a photovoltaic system 135, (iii) an electrochemical battery 140 (primary or secondary battery), such as an accumulator, (iv) a fuel-driven electricity generator 145. For example, energy converter 125 may be or comprise an AC/DC converter or a frequency converter for AC, and may particularly be connected to an electrical connector or port 130 provided in one of the container walls such that the converter 125 can be supplied with electrical energy provided to the connector or port 130 from an electrical energy source outside of the container 105, such as an electrical grid, e.g. via a cable that is connectable to the connector or port 130 from the exterior of the container 105. The electrical energy to be supplied by the electric energy supply unit 120a may particularly be accessible from the outside of container 105 through one more access devices 160a, b, such as EV charging stations, as illustrated in Fig. 5.

If the electrical energy supply unit 120a comprises one or more accumulators 140, those might particularly be selected to be used or even recycled accumulators e.g. previously used to power an EV or other device or system having high power demands. In this way, used accumulators, which are no longer powerful enough for their original use case, may still be re-used for a (less demanding) use as an energy source of the electrical energy supply unit 120a. Furthermore, the electrical energy supply unit 120a may be configured to re-charge the accumulator(s) 140 using electrical energy provided by a container-external source of electrical energy via connector/port 130.

The energy supply unit 100 may particularly be configured to automatically orient a solar panel of the photovoltaic system 135 towards the sun. Specifically, the photovoltaic system 135 may comprise a turning element (e.g. a bogie or turntable, preferably powered) for turning the solar panel or the container 105 as a whole in a suitable orientation, in order to optimize the solar energy to be collected by the solar panel. Instead or in addition, the energy supply unit 100 may be configured to sense solar energy by one or more sensors, e.g. the solar panel itself, and determine therefrom instructional information to be displayed on display 115 or control data for controlling an operation of the turning element. This instructional information may then indicate an optimal orientation of the container 105 as a whole or a movable portion thereof, such as a swiveling container wall 110 or 110a carrying the solar panel (e.g. orientation = opening angle of swiveling wall carrying the solar panel). Accordingly, based on that information and using the turning element, the container or the movable portion thereof may be manually transitioned into such optimal orientation. Instead, the control data may be used to control the turning element such as to automatically orient the container 105 as a whole or the solar panel into the determined optimal orientation.

The energy storage 150 may particularly comprise various separate energy storage compartments 150a-c such that different forms of energy carriers, e.g. different liquid or gaseous fuels, can be stored and accessed separately by corresponding one or more access devices 160c, such as fuel pumps or outlets for gaseous fuels, e.g. hydrogen or natural gas. Particularly, the storage compartments may either serve directly as respective containers for the related energy carrier, or instead as a compartment for receiving a container module for such energy carrier, e.g. a tank container in the form of a replaceable module with a suitable size and format for storing it in the related storage compartment allocated for that energy carrier.

Furthermore, the energy supply unit 100 comprises, preferably within the interior 105a of container 105, a data storage 165 and/or data interface, such as wireless interface for establishing a unidirectional or bidirectional data connection between the energy supply unit 100 and a remote data source 190. Specifically, the data interface may be to support standardized wireless communication technology, such as cellular technologies (e.g. LTE or 5G or later generations as standardized by ETSI, 3GPP, IEEE or other global standard-defining organizations (SDOs)), WLAN or Bluetooth. The remote data source may particularly be a remote server in the internet, and/or a mobile data source, e.g. on a service vehicle or a vehicle provided for transporting the energy supply unit 100 between different locations.

In addition, energy supply unit 100 may comprise a control unit 180 for controlling one or more different functionalities of energy supply unit 100 and for communicating data 175 with data storage 165 or via a data interface 170 with remote data source 190. Accordingly, control unit 180 may be configured to control or configure energy supply unit 100 in accordance with data 175 read from data storage 165 and/or received from remote data source 190.

For example, such data 175 may define information, e.g. digital signage, to be displayed on display 115 and accordingly, control unit 180 may be configured to control the display 115 such as to display such information, e.g. a commercial, or operating instructions for the energy supply unit 100. According to another example, such data 175 may represent maintenance information for causing the control unit 180 to temporarily operate the energy supply unit 100 in a maintenance mode, as defined by such maintenance information. Particularly, the maintenance information may have been defined based on information previously communicated by the energy supply unit 100 via the data interface to the remote data source to that purpose, 190. The energy supply unit 100 may further comprise one or more sensors 185 for detecting a state, a condition or operational issues of the energy supply unit 100 and for providing corresponding data for communication to the remote data source 190 (e.g. a remote maintenance control server). Data 175 may also comprise update information, e.g. program code, for updating one or more computer programs running on one or more processors of the energy supply unit 100, e.g. in control unit 180.

The control unit 180 may be connected to other components of the energy supply unit 100 which it is designed to control or communicate with, via individual control lines, a common data bus, or even wirelessly (all of these connections are not shown in Fig. 1).

Furthermore, the energy supply unit 100 may comprise one or more further service functionalities and respective arrangements. For example, it may comprise one or more of (i) a vending machine 210 for goods, such as snacks and beverages, (ii) a service- or inquiry kiosk, e.g. for event information purposes or sale of coupons or tickets (e.g. car park tickets or event tickets), (iii) a parcel deposit and pick-up station 220, and/or (iv) an automatic teller machine (ATM) or other service terminal for financial services (e.g. for paying for goods, services or energy bought by a user at the energy supply unit 100). Particularly, the energy supply unit 100, respectively container 105, may be configured such that these services are accessible from outside the container 105 at one of its exterior container walls, which may particularly be a container wall other than container walls 110 and 110a. Furthermore, the energy supply unit 100 may be configured to selectively display commercial information or branding information being specifically related to the goods and services on sale at the energy supply unit 100. For example, such information may be demanded and received from remote data source 190 via the data interface 170 or stored and retrieved from (local) data storage 165.

The energy supply unit 100 may further comprise a position detection unit 230, e.g. a GPS unit, for detecting its current position and provide perspective location information. The location information may particularly be provided to the control unit 180 in order to enable it to control the energy supply unit 100 based on the location information. Such location-dependent control may particularly comprise one or more of the following: (i) language settings, (ii) selection of information to be displayed on display 115, (iii) configuring one or more settings of the energy supply unit, e.g. of display 115 (e.g. color scheme, brightness), as a function of selected weather data for the current location, (iv) setting a conversion type (e.g. voltage or frequency conversion levels) of an energy converter 125 of the energy supply arrangement 120, (v) selection of goods and/or services or a type of energy made selectively available at the energy supply unit 100 at the current location and/or related pricing and displayed currency units. Furthermore, the location data may be used for tracking purposes and as a basis of an anti-theft solution (e.g. initiating an alarm or the like, when the energy supply unit 100 leaves a defined geofence).

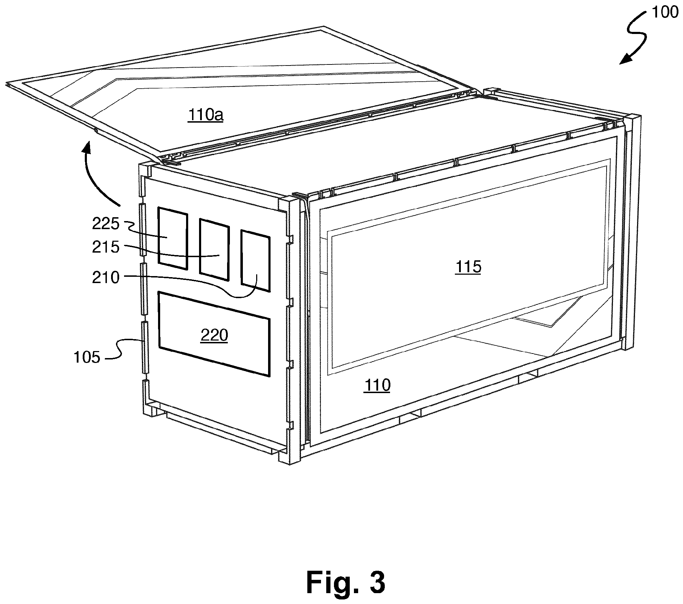

**Fig. 2** schematically illustrates a perspective view of energy supply unit 100, where its two swiveling exterior container walls 110 and 110a are closed. At one of the front sides of the container 105, several service modules are visible, namely man-machine-interfaces for the vending machine 210, the service- or inquiry kiosk 215, the parcel deposit and pick-up station 220 and the ATM 225. At the top edges of container walls 110 and 110a there are hinges for enabling a pivoting (swiveling) of each of container walls 110 and 110a around a respective horizontal hinge axis from a closed position as shown in Fig. 2 to an open position as illustrated in **Fig. 3** for container wall 110a and in **Fig. 4** for both container walls 110 and 110a. For the sake of simplifying the illustration, Fig. 4 does not show the various components provided inside container 105, as discussed above with reference to Fig. 1.

**Fig. 5** schematically illustrates a perspective view of the energy supply unit 100 in a state, where one of the two swiveling exterior container walls, namely container wall 110a, is open, such that the various access devices 160a-c for supplying energy are accessible from the exterior of the container 105. Specifically, in the present example, access devices 160a and 160b are designed as electric charging stations for electrical vehicles (EVs) while access device 160c is a fuel pump for a liquid or gaseous fuel (energy carrier), e.g. gasoline/diesel, hydrogen, or natural gas. Accordingly, access devices 160a and 160b each comprise (charging) cables for electrically connecting the access device to an EV (i.e. its battery pack), while access device 160c comprises one or more hoses 200 for supplying one or more fuels stored in energy storage 150.

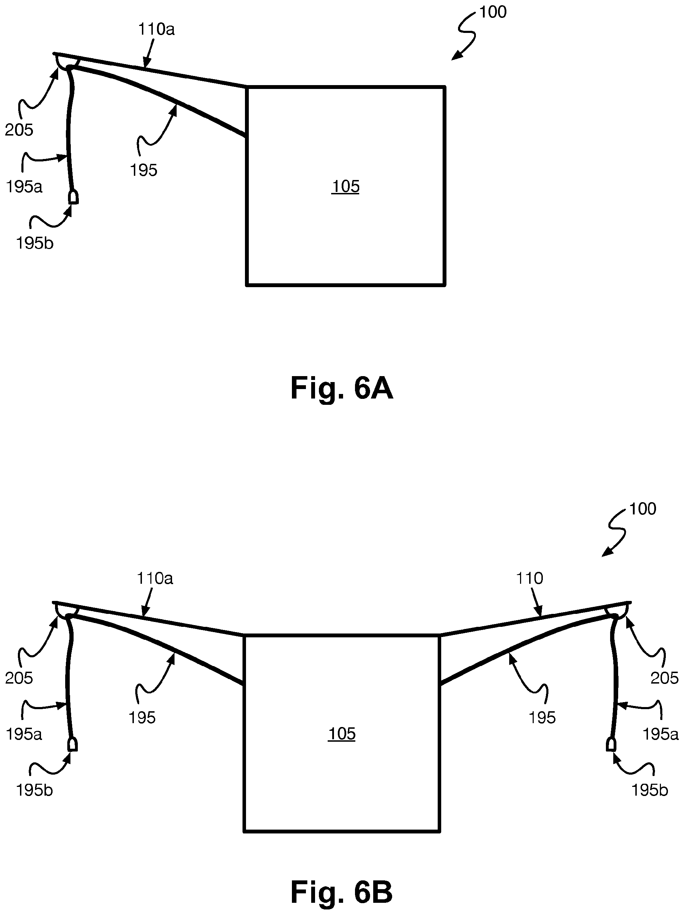

**Fig. 6A** shows a schematic side view of the energy supply unit of Fig. 5, wherein a cable 195 or hose 200 of an access device is guided by a guiding means 205 located at a fixed-point position provided at the open swiveling exterior container wall 110a, such as to enable a provision of the cable/hose for use, where its terminal section 195a (including a connector or tap for connection to a vehicle) extends in a top-down direction from the open container wall 110a in order to enable a convenient, simple operation of the access device.

**Fig. 6B** shows another schematic side view of the energy supply unit of Fig. 5 according to an embodiment thereof, where there are one or more access devices 160 a-c on each of two opposing sides of the container 105, which become accessible from the exterior of the container 105, when both container walls 110 and 110a are put in an open position. Like in Fig. 6A, guiding means 205 may be used on both sides in order to enable a top-down provision of the cable 195 /hose 200 from the open container walls 110 and 110a in order to enable a convenient, simple operation of the access devices 160a-c on both sides of the container 105.

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatus' and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: energy supply unit
- 105: transport container
- 105a: interior of the transport container
- 110: first exterior container wall, swiveling
- 110a: second exterior container wall, swiveling
- 115: display
- 120: energy supply arrangement
- 120a: electrical energy supply unit
- 125: energy converter, e.g. AC/DC converter
- 130: electrical connector
- 135: first energy source, photovoltaic system
- 140: second energy source, electrochemical battery or accumulator
- 145: third energy source, fuel-driven electricity generator
- 150: energy storage, e.g. tank for a fuel or another energy carrier
- 150a-c: energy storage compartments
- 160a-c: access device(s), e.g. EV charging station(s) or fuel pumps
- 165: data storage
- 170: data interface
- 175: data, information
- 180: control unit
- 185: sensor(s)
- 190: remote data source
- 195: cable
- 195a: terminal section of the cable 195 or hose 200, respectively
- 195b: connector or tap
- 200: hose
- 205: guiding means at fixpoint position
- 210: vending machine for goods, e.g. snacks or beverages
- 215: service- or inquiry kiosk, e.g. for event information purposes
- 220: parcel deposit and pick-up station
- 225: automated teller machine, ATM
- 230: position detection unit

## Claims

1. A mobile energy supply unit, comprising:
a transport container with an exterior container wall comprising a display for displaying information;
an energy supply arrangement provided at least in parts within the container and
comprising:
one or more of an energy source, an energy converter, and an energy storage, and
an access device for providing accessibility from the exterior of the container to energy provided by the energy supply arrangement; and
a data storage and/or at least one data interface for receiving data from a remote data source;
wherein the energy supply unit is configured to obtain data from the data storage or via the at least one data interface from the remote data source and to display information on the display as a function of the obtained data.

2. The energy supply unit of claim 1, wherein the energy supply arrangement is configured as one or more of the following:
- an electrical charging station for electrical or hybrid vehicles;
- an electrical charging station for portable electronic devices;
- a supply station for an energy carrier.

3. The energy supply unit of any one of the preceding claims, wherein the energy supply arrangement is configured to simultaneously or selectively supply two or more different forms of energy and/or different energy carriers.

4. The energy supply unit of any one of the preceding claims, wherein the energy source comprises one or more electrochemical cells for generating electrical energy.

5. The energy supply unit of any one of the preceding claims, wherein the energy supply unit is configured to:
communicate a current status or mode of operation of the energy supply unit to the data storage and/or via the at least one data interface to the remote data source;
obtain in response from the data storage or the remote data source, respectively, specific information as a function of the communicated current status or mode of operation; and
display the received specific information on the display.

6. The energy supply unit of claim 5, wherein the energy supply unit has a maintenance mode of operation wherein the energy supply unit is configured to:
communicate the maintenance mode as current mode of operation of the energy supply unit to the data storage and/or via the at least one data interface to the remote data source;
obtain in response from the data storage or the remote data source, respectively, data representing instructional information on how to properly set-up, configure and/or maintain the energy supply unit; and
display a representation of the instructional information on the display.

7. The energy supply unit of any one of the preceding claims, wherein the energy supply unit has a remote-control mode of operation, wherein the energy supply unit is configured to:
obtain via the at least one data interface control information and/or to generate control information as a function of obtained sensor data generated by one or more sensors for detecting a current status or operation of the energy supply unit; and
enable or disable at least one functionality of the energy supply unit as a function of the obtained control information.

8. The energy supply unit of any one of the preceding claims, wherein the at least one data interface comprises a standardized data interface being configured for wireless or wired communication with a mobile computing or communication device, and/or a communication system of a vehicle.

9. The energy supply unit of any one of the preceding claims, wherein the container wall is configured such that it can be swiveled between a closed position where it closes the container, at least in parts, and an open position where it provides access to a space within the interior of the container.

10. The energy supply unit of claim 9, wherein:
the energy supply unit is configured to supply electrical energy via one or more cables or a liquid or gaseous energy carrier via one or more hoses and at least one of the cables or hoses, respectively, is fixed to or guided relative to the container wall at a fixpoint position (e.g. by a fixing or guiding means) in such a way that when the container wall is in its open position, a free terminal section of the cable or the hose, respectively, extends from the fixing position.

11. The energy supply unit of any one of the preceding claims, wherein the transport container is or comprises one or more of the following:
- an intermodal container;
- a roller container;
- a tank container for a liquid or gas.

12. The energy supply unit of any one of the preceding claims, wherein the energy supply arrangement comprises at least one of the following:
- a photovoltaic system;
- a connector for electrically connecting the energy supply arrangement to an external source of electrical energy;
- an electrochemical accumulator;
- an energy converter for converting a first electrical form of energy received as an input energy into a different second electrical form of energy as an output energy;
- an energy converter for converting a non-electric form of energy received as an input energy into electrical energy as an output energy.

13. The energy supply unit of any one of the preceding claims, further comprising at least one of a vending machine for goods, a service kiosk, an inquiry kiosk, a parcel deposit and pick-up station, an automated teller machine.

14. The energy supply unit of any one of the preceding claims, further comprising a position detection unit configured to determine a current location of the energy supply unit.

15. The energy supply unit of claim 14, wherein the energy supply unit is further configured to automatically configure one or more of the following as a function of a current location determined by the position detection unit:
- a language setting for the display or another possibly present man-machine-interface provided on or at the energy supply unit;
- a conversion setting of an energy converter of the energy supply arrangement;
- a display setting of the display;
- a selection of type or amount of energy, goods or services the energy supply unit is offering for supply;
- a configuration of a vending machine for goods, a service kiosk, an inquiry kiosk, a parcel deposit and pick-up station, and/or an automated teller machine of the energy supply unit;
- information to be displayed on the display or another man-machine interface of the energy supply unit.

16. The energy supply unit of any one of the preceding claims, wherein the energy supply unit is further configured to receive software-update data via the at least one data interface and to perform a software-update of software configured to be executed on a processing unit of the energy supply unit based on such received software-update data.
